# EUROPÄISCHE PATENTSCHRIFT

(11) **EP 2 786 108 B1**
(45) Veröffentlichungstag und Bekanntmachung des Hinweises auf die Patenterteilung: **12.10.2016**
(21) Anmeldenummer: 12808698.0
(22) Anmeldetag: 30.11.2012
(51) Int. Cl.: F23Q 7/00, G01M 15/04, G01L 19/06, G01L 23/10

(54) **DRUCKMESSEINRICHTUNG MIT ZUSATZMEMBRAN**
PRESSURE-MEASURING DEVICE WITH ADDITIONAL DIAPHRAGM
SYSTÈME DE MESURE DE PRESSION AVEC MEMBRANE SUPPLÉMENTAIRE

(30) Priorität: 02.12.2011 DE 102011087641
(43) Veröffentlichungstag der Anmeldung: 08.10.2014
(73) Patentinhaber: Robert Bosch GmbH, 70442 Stuttgart (DE)
(72) Erfinder: SCHOLZEN, Holger, 70439 Stuttgart (DE); KRUEGER, Juergen, 71686 Remseck-Aldingen (DE); WOLFF, Janpeter, 75449 Wurmberg (DE); MAIERSCHLEICH, Anke, 71397 Leutenbach (DE); MUELLER, Michael, 8466 Trüllikon (CH); AMMANN, Martin, 8552 Felben-Wellhausen (CH); DOERING, Christian, 70563 Stuttgart (DE); KOETZLE, Wolfgang, 71139 Ehningen (DE)
(86) Internationale Anmeldenummer: PCT/EP2012/074095
(87) Internationale Veröffentlichungsnummer: WO 2013/079661

(56) Entgegenhaltungen:
- WO-A1-2006/072514
- GB-A- 1 207 562
- US-A1- 2009 320 576

## Beschreibung

### Stand der Technik

Die Erfindung betrifft eine Druckmesseinrichtung zur Erfassung des Brennraumdrucks eines Verbrennungsmotors nach dem Oberbegriff des Anspruchs 1.

Die US 2009/0320576 offenbart Druckmesseinrichtungen, bei denen ein Dichtelement vorgesehen ist. Dieses Dichtelement dient dazu, dass der Kraftübertragungskörper sich reibungsfrei in axialer Richtung innerhalb des Gehäuses bewegen kann.

Die WO 2006/072514 beschreibt ebenfalls eine Einrichtung zur Messung eines Drucks im Brennraum einer selbstzündende Brennkraftmaschine, welche eine Stahlmembran zur Abschirmung eines Kraftmesselements gegen Brenngase aufweist.

DE 10 2005 061 879 A1 offenbart eine Glühstiftkerze für einen Verbrennungsmotor, bei der in einem Gehäuse eine Druckmesseinheit aufgenommen ist. Die Glühstiftkerze umfasst ferner ein Heizelement, das relativ zum Gehäuse verschiebbar ist, mit dem Drucksensor zumindest mittelbar zusammenwirkt, um eine Messung des Drucks im Brennraum der Brennkraftmaschine zu ermöglichen. Hierzu wird das Heizelement mit dem Druck, der im Brennraum herrscht, beaufschlagt und über ein Stützrohr und eine Kraftübertragungshülse eine Kraft auf den Drucksensor ausgeübt. Der Drucksensor ist vorzugsweise als piezoelektrisches Element ausgeführt, das über Messleitungen abgegriffen wird. Ferner weist die Glühstiftkerze ein brennraumseitiges Ende auf, das den im Brennraum herrschenden Bedingungen, insbesondere der Temperatur, ausgesetzt ist. Am brennraumseitigen Ende weist die Glühstiftkerze einen Dichtraum auf, in dem eine biegeelastische Membran aufgenommen ist. Zwischen der Membran und dem Heizelement ist zusätzlich ein Dichtmittel vorgesehen, das der biegeelastischen Membran brennraumseitig vorgeschaltet ist. Das Dichtemittel schützt den Dichtraum vor Verschmutzungen, die nach einer bestimmten Betriebsdauer die Genauigkeit der Messung des Drucks im Brennraum verringern würde. Dabei kann das Dichtmittel temperaturbeständig und fließfähig ausgebildet sein. Alternativ kann das Dichtmittel pulver- oder pastenförmig sein.

DE 10 2004 012 673 A1 offenbart eine Glühstiftkerze für eine Brennkraftmaschine, die ein Kerzengehäuse, einen Glühstift und einen integrierten Drucksensor umfasst. Zwischen dem Glühstift und dem Kerzengehäuse ist eine Relativbewegung möglich. Der Glühstift wird im Betrieb mit einem Brennraumdruck beaufschlagt, wodurch der Glühstift gegenüber dem Kerzengehäuse eine Relativbewegung durchführt. Der Drucksensor ermittelt anhand der Quantität der Relativbewegung die Größe des Drucks, der im Brennraum herrscht. Zwischen einer Innenfläche des Kerzengehäuses und dem Glühstift ist ein elastisches Element angeordnet, das den Zwischenraum zwischen Kerzengehäuse und Glühstift abdichtet. Das elastische Element ist als Ringelement oder Federelement ausgebildet. Eine Justierung des elastischen Elements erfolgt über eine Auflage, einen innerhalb des Gehäuses angebrachten Pressring oder Schweißnähte.

Die zwischen dem Glühstift als Kraftübertragungskörper und dem Kerzengehäuses angebracht biegeelastische Membran wird durch die im Brennraum des Verbrennungsmotors herrschenden hohen Temperaturen mit einem Thermoschock beaufschlagt, wodurch sich deren Elastizitätsverhalten ändert und dadurch das Messergebnis verfälscht wird. Ferner stellt der Thermoschock eine thermisch-mechanische Beanspruchung der biegeelastischen Membran dar, bei der in der Membran hohe örtliche und zeitliche Temperaturgradienten auftreten. Mit den hohen Temperaturgradienten gehen Wärmdehnungen und Spannungen einher, die die Lebensdauer der biegeelastischen Membran reduzieren.

### Offenbarung der Erfindung

Die erfindungsgemäße Druckmesseinrichtung hat den Vorteil, dass die beigeelastische Membran zum Brennraum hin sicher abgedichtet ist. Dadurch kann der Druck, der in einem Brennraum eines Verbrennungsmotors herrscht, auch unter ungünstigen Bedingungen exakt gemessen werden. Dabei wird die Genauigkeit der Messung über eine hohe Lebensdauer hinweg aufrechterhalten. Die Zusatzmembran schirmt hierbei die biegeelastische Membran, die zwischen der Innenseite des Gehäuses und der Außenseite des Kraftübertragungskörpers angebracht ist, gegen Temperatureinwirkungen und Einflüsse des Kraftstoffs aus dem Brennraum des Verbrennungsmotors ab. Die erfindungsgemäße Druckmesseinrichtung stellt eine Möglichkeit zur Verfügung, die nachteiligen Auswirkungen eines Thermoschocks auf die Membran in einfacher Art und Weise zu minimieren. Die Messgenauigkeit der Druckmesseinrichtung wird durch die Anordnung der Zusatzmembran praktisch nicht beeinträchtigt und gleichzeitig die Lebensdauer der Druckmesseinrichtung verlängert. Dadurch, dass die biegeelastische Zusatzmembran biegeschlaff ausgeführt ist wird die Relativbewegung zwischen dem Kraftübertragungskörper und dem Gehäuse nur minimal beeinträchtigt. Biegeschlaff bedeutet, dass die Biegesteifigkeit der biegelastischen Zusatzmembran deutlich geringer ist als die Biegesteifigkeit der biegeelastischen Membran. Dadurch nimmt die Zusatzmembran keine wesentlichen Biegebeanspruchungen auf und hat insofern nur minimale mechanische Auswirkungen auf die mittels des Kraftübertragungskörpers aufgenommene und vermessene Druckkraft. Dadurch wird eine hohe Messgenauigkeit der erfindungsgemäßen Druckmesseinrichtung gewährleistet.

Vorteilhafter Weiterbildungen der Erfindung sind durch die Maßnahmen der Unteransprüche möglich.

Eine vorteilhafte Ausführungsform besteht darin, wenn an einer Außenseite des Kraftübertragungskörpers und an einer Innenseite des Gehäuses ein erster und ein zweiter Stützring angeordnet sind, und wenn zwischen dem ersten und dem zweiten Stützring die biegeelastische Zusatzmembran angeordnet ist. Zwischen dem ersten und dem zweiten Stützring ist dabei ein ringförmiger Spalt ausgebildet, wobei auf einer brennraumseitigen Stirnseite des ersten und zweiten Stützrings die den ringförmigen Spalt überdeckende biegeelastische Zusatzmembran angeordnet ist.

Ferner bewirkt ein Anbringen der Zusatzmembran auf den Stirnseiten des ersten und zweiten Stützrings, dass die Zusatzmembran durch den Druck im Brennraum des Verbrennungsmotors an die Stützringe angepresst wird. Dadurch wird eine stabile flächige Anpressung der Zusatzmembran an die Stützringe gewährleistet.

Des Weiteren wird die erfindungsgemäße Druckmesseinrichtung vorzugsweise derart montiert, dass der Kraftübertragungskörper gegenüber dem Gehäuse in axiale Richtung in Richtung des Brennraums versetzt ist. Hierdurch ist die Zusatzmembran bei der Montage vorgespannt. Während des Betriebs der Druckmesseinrichtung wirkt eine Druckkraft aus dem Brennraum der Vorspannung entgegen. Hierbei wird der Kraftübertragungskörper gegenüber dem Gehäuse in axialer Richtung vom Brennraum axial wegbewegt, so dass sich die Stirnseiten der Stützringe bündig gegenüberstehen. Hierbei ist die Zusatzmembran in einer Lage, in der sie nahezu frei von mechanischen Beanspruchungen ist. Schwankungen des Drucks im Brennraum bewirken somit lediglich geringe Relativbewegungen zwischen dem Kraftübertragungskörper und dem Gehäuse, wodurch die Zusatzmembran während des Betriebs lediglich geringen Biegebeanspruchungen ausgesetzt ist. Niedrige Druckschwankungen im Brennraum bewirken ein geringes Schwanken der Zusatzmembran um die Lage, in der sie nahezu frei von mechanischen Beanspruchungen ist. Hierdurch wird die Lebensdauer der Zusatzmembran verlängert.

Vorteilhaft ist, wenn die Zusatzmembran aus einem wärmeleitenden Material hergestellt ist. Wärmeleitende Materialien neigen bei intensiver Temperatureinwirkung zu gleichmäßigen Temperaturverteilungen und niedrigen örtlichen Temperaturgradienten. Hierdurch wird die Wirkung eines Thermoschocks auf die Zusatzmembran vermindert. Beeinträchtigungen weiterer Komponenten durch eine Thermoschock-Beanspruchung wird entgegengewirkt. Hierdurch wird für die Zusatzmembran eine hohe Abschirmungswirkung und eine hohe Zuverlässigkeit gewährleistet. Gleichermaßen ist es bevorzugt, wenn die Zusatzmembran aus einer hochfesten Stahllegierung hergestellt ist. Hochfeste Stahllegierungen weisen eine hohe Temperatur- und Ermüdungsbeständigkeit auf und sind einfach herstellbar. Ferner können hochfeste Stahllegierungen geschweißt werden. Die Temperatur- und Ermüdungsbeständigkeit von hochfesten Stahllegierungen erfüllen in vorteilhafter Weise die Anforderungen in punkto mechanischer und thermischer Belastbarkeit, die an eine Zusatzmembran gestellt werden. Einer Verschlechterung der Messgenauigkeit der Druckmesseinrichtung durch eine Degradation des Materials wird dadurch entgegengewirkt, und eine hohe Lebensdauer der Druckmesseinrichtung gewährleistet.

Die Zusatzmembran wird vorzugsweise mit den Stützringen über eine dichte umlaufende Verschweißung verbunden. Umlaufende Verschweißungen sind einfach herstellbar und gewährleisten eine hohe Festigkeit bei hohen Temperaturen. Dadurch wird eine sicher Abdichtung der dahinter liegenden biegeelastischen Membran gewährleistet. Ferner kann die Herstellung von derartigen Verschweißungen einfach automatisiert werden Eine umlaufende Verschweißung wird den Anforderungen an Festigkeit und Temperaturbeständigkeit einer Zusatzmembran, die den Druck- und Temperatureinwirkungen aus einem Brennraum eines Verbrennungsmotors ausgesetzt wird, gerecht und stellt eine hohe Zuverlässigkeit der Zusatzmembran sicher.

Die Zusatzmembran wird vorzugsweise als Folie mit einer Dicke von 0,05 mm bis 0,5 mm ausgebildet. Eine Dicke von 0,05 mm bis 0,5 mm stellt eine wirksame thermische Abschirmung der biegeelastischen Membran sicher, die den Bedingungen in einem Brennraum eines Verbrennungsmotors standhält. Dadurch ist die Zusatzmembran gut verformbar. Die Zusatzmembran verwölbt sich leicht und nimmt praktisch keine Biegemomente auf. Eine Dicke von 0,05 mm bis 0,5 mm verleiht einer Zusatzmembran in vorteilhafter Weise gleichzeitig die Eigenschaft einer Folie, um eine thermische Abschirmung darzustellen und gleichzeitig ein hohes Maß an Verformbarkeit aufzuweisen.

Ferner ist ein ringförmiger Spalt zwischen dem ersten und zweiten Stützring ausgebildet, wobei die Breite des Spalts das Ein- bis Dreifache der Dicke der Zusatzmembran beträgt. Die Breite des ringförmigen Spalts bestimmt, wie weit sich die Zusatzmembran infolge der Druckbeanspruchung aus dem Brennraum verwölben kann. Hierbei gewährleistet ein breiter Spalt eine hohe axiale Beweglichkeit des Kraftübertragungskörpers gegenüber dem Gehäuse, ohne dass die Zusatzmembran die Relativbewegung zwischen dem Kraftübertragungskörper und dem Gehäuse beeinträchtigt. Ein schmaler Spalt hingegen gewährleistet, dass sich die Zusatzmembran infolge der Druckeinwirkung aus dem Brennraum nur gering verformt. Hierbei entsteht nur eine geringe Krümmung der Zusatzmembran im Bereich des Spalts. Hierdurch bleibt die druckbeaufschlagte Oberfläche der Zusatzmembran nahezu konstant, so dass praktisch keine Beeinträchtigung des Messergebnisses der Druckmesseinrichtung auftritt. Ein ringförmiger Spalt mit einer Breite, die zwischen dem Ein- bis Dreifachen der Dicke der Zusatzmembran liegt, wird eine vorteilhafte Kombination von axialer Beweglichkeit des Kraftübertragungskörpers gegenüber dem Gehäuse und Messgenauigkeit der Druckmesseinrichtung gewährleistet.

Des Weiteren werden Ausführungsformen der erfindungsgemäßen Druckmesseinrichtung bevorzugt, in denen mindestens ein Stützring eine verrundete Kante aufweist. Eine verrundete Kante eines Stützrings ermöglicht ein kontinuierliches Anliegen der Zusatzmembran im Bereich des ringförmigen Spalts. Hierdurch weisen verwölbte Bereiche der Zusatzmembran geringe Krümmungsradien auf. Dadurch treten im Bereich der geringen Krümmungsradien niedrige mechanische Beanspruchungen auf. Verminderte mechanische Beanspruchungen der Zusatzmembran erhöhen deren Lebensdauer und Zuverlässigkeit.

Die Zusatzmembran ist einem Verbrennungsgas aus dem Brennraum ausgesetzt, das eine hohe Temperatur aufweist. Ferner beinhaltet das Verbrennungsgas Kraftstoffrückstände, so dass die Zusatzmembran einem hohen Korrosionsrisiko ausgesetzt ist. Eine Zusatzmembran, die aus einem korrosionsbeständigen Material hergestellt ist, hält diesen widrigen Bedingungen stand und weist eine erhöhte Zuverlässigkeit auf. Ferner ist eine Zusatzmembran in einer Druckmesseinrichtung einer hohen Zahl von Lastzyklen ausgesetzt. Dadurch besteht für die Zusatzmembran die Gefahr eines Versagens infolge von Materialermüdung. Eine Zusatzmembran, die aus einem ermüdungsbeständigen Material hergestellt ist, hält einer hohen Zahl an Lastwechseln stand.

### Ausführungsbeispiele

Die Erfindung wird in der nachfolgenden Beschreibung und in der Zeichnung näher erläutert.
- Figur 1: zeigt einen schematischen Aufbau einer erfindungsgemäßen Druckmesseinrichtung,
- Figur 2a: zeigt eine schematische Ansicht einer vorgespannten Zusatzmembran im Montagezustand,
- Figur 2b: zeigt eine schematische Ansicht einer Zusatzmembran im Betriebszustand,
- Figur 3: zeigt einen schematischen Querschnitt einer erfindungsgemäßen Druckmesseinrichtung gemäß einer weiteren Ausführungsform.

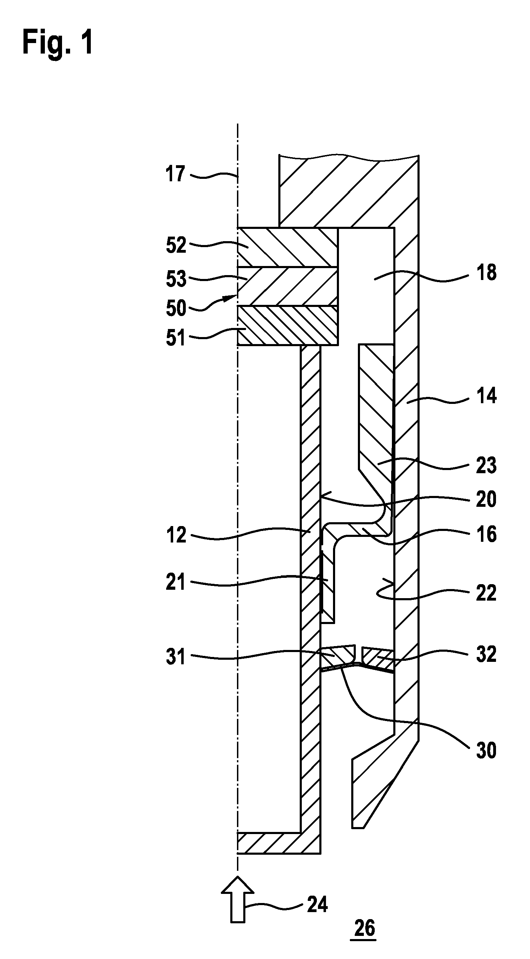

In Figur 1 ist ein brennraumseitiger Teil einer Druckmesseinrichtung abgebildet. Die Druckmesseinrichtung umfasst einen Kraftübertragungskörper 12, der in einem Gehäuse 14 aufgenommen ist. Der Kraftübertragungskörper 12, der dem Brennraum 26 eines Verbrennungsmotors ausgesetzt ist, ist gegenüber dem Gehäuse 14 entlang einer Längsachse 17 axial beweglich im Gehäuse 14 angeordnet. Der Kraftübertragungskörper 12 wird innerhalb des Gehäuses 14 mittels einer biegeelastischen Membran 16 gehalten. Dazu weist die biegeelastische Membran 16 ein inneres Stützteil 21 und ein äußeres Stützteil 23 auf. Die biegeelastische Membran 16 ist dabei mit dem inneren Stützteil 21 an einer Außenseite 20 des Kraftübertragungskörper 12 und mit dem äußeren Stützteil 23 an einer Innenseite 22 des Gehäuses 14, beispielsweise jeweils mittels einer umlaufenden Schweißnaht befestigt. Dadurch wird ein zwischen dem Kraftübertragungskörper 12 und dem Gehäuse 14 ausgebildeter Innenraum 18 mittels der Membran 16 gegenüber dem Brennraum 26 des Verbrennungsmotors abgedichtet. Der im Brennraum 26 herrschende Druck, der eine Druckkraft 24 auf den Kraftübertragungskörper 12 ausübt, bewirkt, dass aufgrund der biegeelastischen Membran 14 der Kraftübertragungskörper 12 eine axiale Bewegung gegenüber dem Gehäuse 14 entlang der Längsachse 17 ausführt. Die biegeelastische Membran 16 ist mit einer Biegesteifigkeit derart federnd ausgebildet, dass der Kraftübertragungskörpers 12 innerhalb des Gehäuse 14 die erforderliche axiale Bewegung innerhalb des Gehäuse 14 ausführen kann, um die auf den Kraftübertragungskörper 12 ausgeübte Druckkraft auf eine Druckmesseinheit 50 zu übertragen. Die Druckmesseinheit 50 umfasst beispielsweise eine erstes Stützelement 51, ein zweites Stützelement 52 und einen Drucksensor 53. Das erste Stützelement 51 steht in Wirkverbindung mit dem Kraftübertragungskörper 12. Das zweite Stützelement 52 stützt sich am Gehäuse 14 ab. Zwischen dem ersten Stützelement 51 und zweiten Stützelement 52 ist der Drucksensor 53 mittels einer Vorspannkraft angeordnet. Der Drucksensor 53 ist beispielsweise ein Piezoelement, welche die auf den Kraftübertragungskörper 12 einwirkende und über das erste Stützelement 37 weitergeleitete Druckkraft erfasst.

Zwischen Gehäuse 14 und Kraftübertragungskörper 12 ist zusätzlich eine biegeelastische Zusatzmembran 30 angeordnet, die der biegeelastischen Membran 16 brennraumseitig vorgelagerte ist. Die Zusatzmembran 30 hat die Aufgabe, die biegeelastische Membran 16 zum Brennraum 26 hin abzudichten und somit die biegeelastische Membran 16 von Temperatur- und Druckeinwirkungen aus dem Brennraum 26 abzuschirmen. Die biegeelastische Zusatzmembran 30 ist aus einem biegeschlaffen Material hergestellt, derart, dass die Biegesteifigkeit der biegelastischen Zusatzmembran 28 deutlich geringer ist als die Biegesteifigkeit der biegelastischen Membran 16.

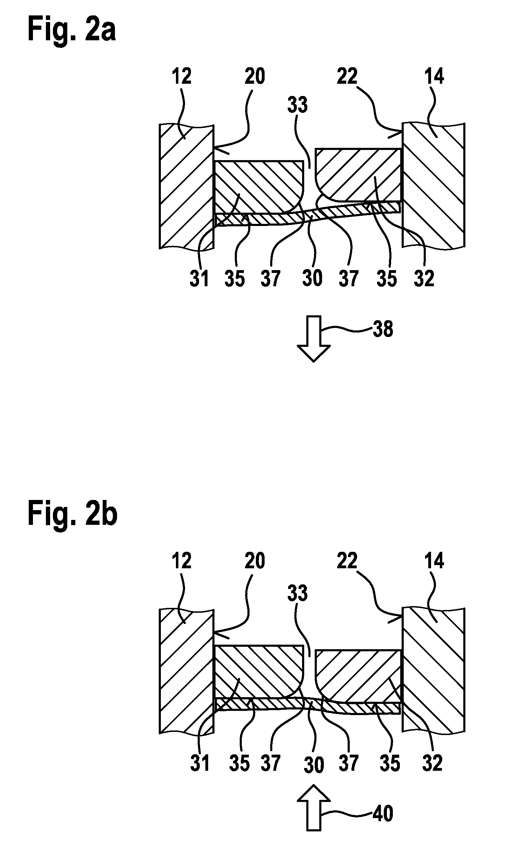

Die Ausführung der biegeelastischen Zusatzmembran 30 ist in Figur 2a und 2b näher dargestellt. Dazu sind auf einer dem Brennraum 26 zugewandten Seite der biegelastischen Membran 16 ein erster Stützring 31 und eine zweiter Stützring 32 aufgenommen. Der erste Stützring 31 ist an einer Außenseite 20 des Kraftübertragungskörpers 12 und der zweite Stützring 32 an einer Innenseite 22 des Gehäuses 14 dichtend befestigt. Die Stützringe 31, 32 weisen jeweils eine Stirnseite 35 auf, die dem Brennraum 26 zugewandt sind. Zwischen dem ersten und zweiten Stützring 31, 32 ist ein ringförmiger Spalt 33 ausgebildet, der den Kraftübertragungskörper 12 umschließt. Auf der dem Brennraum 26 zugewandten Stirnseite 35 der Stützringe 31, 32 ist die Zusatzmembran 30 angebracht. Dabei überbrückt die Zusatzmembran 30 den ringförmigen Spalt 33, der zwischen dem ersten Stützring 31 und dem zweiten Stützring 32 ausgebildet ist. Die Breite des Spaltes 33 beträgt dabei vorteilhafterweise das Ein- bis Dreifache der Dicke der Zusatzmembran 30. Dadurch ist eine ausreichende Biegeelastizität der Zusatzmembran 30 und eine sichere Abschirmung der biegeelastischen Membran 16 von dem Temperatur- und Druckeinwirkungen aus dem Brennraum 26 gewährleistet.

Die Zusatzmembran 30 ist beispielsweise mit den Stützringen 31, 32 mittels einer umlaufenden Verschweißung verbunden. Umlaufende Verschweißungen stellen eine belastbare Verbindung von metallischen Werkstoffen bereit und sind ferner automatisch herstellbar. Des Weiteren weist die Zusatzmembran 30 vorzugsweise eine Dicke von 0,05 mm bis 0,5 mm auf. Eine Zusatzmembran dieser Dicke weist eine hohe Betriebsfestigkeit auf und ist gleichzeitig leicht verformbar, wodurch die Relativbewegung zwischen dem Kraftübertragungskörper und dem Gehäuse nicht behindert wird. Des Weiteren wird eine Ausführungsform der erfindungsgemäßen Druckmesseinrichtung bevorzugt, in der der ringförmige Spalt 33 eine Breite aufweist, die unter 2 mm liegt. Ein ringförmiger Spalt 33 dieser Breite gewährleistet eine ungehinderte Relativbewegung des Kraftübertragungskörpers 12 gegenüber dem Gehäuse 14 und gleichzeitig eine geringe Verformung der Zusatzmembran 30. Eine zu starke Verformung der Zusatzmembran 30 senkt deren Lebensdauer und bewirkt eine ungenaue Messung des Drucks im Brennraum 26.

Figur 2a zeigt schematisch den ersten und zweiten Stützring 31, 32 in einem Montagezustand, in dem keine Druckkraft 24 auf die Druckmesseinrichtung 10 einwirkt. Hierbei ist der erste Stützring 31 gegenüber dem zweiten Stützring 32 entlang der Längsachse 17 in Richtung des Brennraums 26 axial versetzt. Dadurch ist die Zusatzmembran 30 ist mit einer Vorspannkraft 38 beaufschlagt. Ferner weisen der erste und der zweite Stützring 31, 32 an der Stirnseite 35 verrundete Außenkanten 37 auf, die im Bereich eines ringförmigen Spalts 33 liegen. Die Zusatzmembran 30 ist in Form einer Folie am ersten und zweiten Stützring 31, 32 flächig angebracht und überbrückt den ringförmigen Spalt 33.

In Figur 2b ist schematisch die Zusatzmembran 30, die an den ersten und zweiten Stützring 31, 32 angebracht ist, im Betriebszustand unter Druckeinwirkung einer Druckkraft 40 aus dem Brennraum 26 dargestellt. Dabei ist der Vorspannkraft 38 die Druckkraft 40 entgegengesetzt. Infolge der Druckkraft 40 ist der Kraftübertragungskörper 12 entlang der Längsachse 17 vom Brennraum 26 weg versetzt. Die Zusatzmembran 30 liegt an den Stirnseiten 35 der Stützringe 31, 32 durchgehend flächig an. Zwischen den Stützringen 31, 32 ist der ringförmiger Spalt 33 ausgebildet, den die Zusatzmembran 30 überbrückt. An den verrundeten Kanten 37 der Stützringe 31, 32 liegt hierbei die Zusatzmembran 30 nur teilweise an. Dadurch weist die Zusatzmembran 30 im Bereich des ringförmigen Spalts 33 unter Belastung eine geringe Verformung auf.

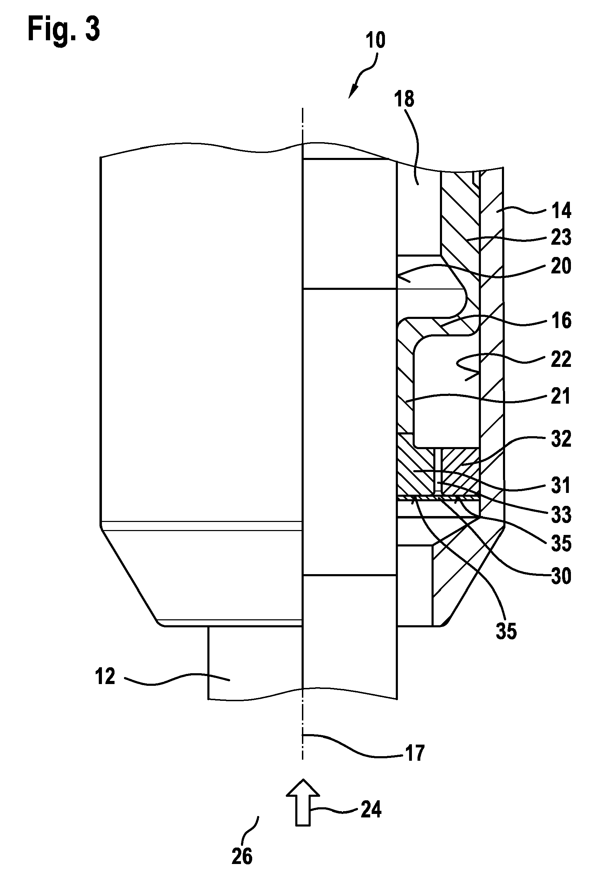

Bei der in Figur 3 schematisch dargestellten Druckmesseinrichtung grenzt der innere erste Stützring 31 unmittelbar an das inneres Stützteil 21 der biegelastischen Membran 16 an. Die Zusatzfolie 30 ist hierbei in einem nicht vorgespannten Zustand gezeigt und liegt flächig auf den Stirnseiten 35 des ersten und zweiten Stützrings 31, 32 wie eine Folie auf. Die Zusatzmembran 30 überbrückt auch hier den ringförmigen Spalt 33, der zwischen dem ersten und zweiten Stützring 31, 32 ausgebildet ist, und dichtet somit den brennraumseitigen Raum vor der biegelastischen Membran 16 sicher ab.

## Patentansprüche

1. Druckmesseinrichtung zur Erfassung eines Drucks in einem Brennraum (26) eines Verbrennungsmotors, mit in einem Gehäuse (14) angeordneten Kraftübertragungskörper (12), welcher dem Brennraum (26) ausgesetzt ist und den Brennraumdruck auf eine Druckmesseinheit (50) zumindest mittelbar mittels einer axialen Bewegung überträgt, und mit einer biegeelastischen Membran (16), die zwischen dem Kraftübertragungskörper (12) und dem Gehäuse (14) angeordnet ist, wobei die biegeelastischen Membran (16) federnd ausgebildet ist, um die axiale Bewegung des Kraftübertragungskörpers (12) innerhalb des Gehäuses (14) zu realisieren, **dadurch gekennzeichnet, dass**
- der Kraftübertragungskörper (12) innerhalb des Gehäuses (14) mittels der biegeelastischen Membran (16) gehalten wird und daß
- der biegeelastischen Membran (16) brennraumseitig eine biegeelastische Zusatzmembran (30) vorgeschaltet ist, welche die biegeelastische Membran (16) zum Brennraum (26) hin abdichtet, wobei die Zusatzmembran (30) aus einem biegeschlaffen Material hergestellt ist, derart, dass die Biegesteifigkeit der biegelastischen Zusatzmembran (30) deutlich geringer ist als die Biegesteifigkeit der biegeelastischen Membran (16), so daß die Zusatzmembran keine wesentlichen Biegebeanspruchungen aufnimmt und insofern nur minimale mechanische Auswirkungen auf die mittels des Kraftübertragungskörpers aufgenommene Druckkraft hat.

2. Druckmesseinrichtung nach Anspruch 1, **dadurch gekennzeichnet, dass** an einer Außenseite (20) des Kraftübertragungskörpers (12) ein erster Stützring (31) und an einer Innenseite (22) des Gehäuses (14) ein zweiter Stützring (32) angeordnet ist, und dass zwischen dem ersten und dem zweiten Stützring (31, 32) die biegeelastische Zusatzmembran (30) angeordnet ist.

3. Druckmesseinrichtung nach Anspruch 2, **dadurch gekennzeichnet, dass** zwischen dem ersten und dem zweiten Stützring (31, 32) ein ringförmiger Spalt (33) ausgebildet ist, und dass auf einer brennraumseitigen Stirnseiten (35) des ersten und zweiten Stützrings (31, 32) die biegeelastische Zusatzmembran (30) den ringförmigen Spalt (33) überdeckende angeordnet ist.

4. Druckmesseinrichtung nach Anspruch 2 oder 3, **dadurch gekennzeichnet, dass** die Zusatzmembran (30) mit den Stützringen (31, 32) umlaufend dicht verschweißt ist.

5. Druckmesseinrichtung nach einem der Ansprüche 2, 3 oder 4, **dadurch gekennzeichnet, dass** mindestens ein Stützring (31, 32) verrundete Außenkanten (37) aufweist.

6. Druckmesseinrichtung nach einem der vorhergehenden Ansprüche, **dadurch gekennzeichnet, dass** die Zusatzmembran (30) in einem axial vorgespannten Zustand montiert ist.

7. Druckmesseinrichtung nach einem der vorhergehenden Ansprüche, **dadurch gekennzeichnet, dass** die Zusatzmembran (30) aus einem wärmeleitenden Material hergestellt ist.

8. Druckmesseinrichtung nach einem der vorhergehenden Ansprüche, **dadurch gekennzeichnet, dass** die Zusatzmembran (30) aus einer hochfesten Stahllegierung, insbesondere aus einem hochlegierten Edelstahl hergestellt ist.

9. Druckmesseinrichtung nach einem der vorhergehenden Ansprüche, **dadurch gekennzeichnet, dass** die Zusatzmembran (30) aus einem korrosionsbeständigem Material und aus einem ermüdungsbeständigem Material hergestellt ist.

10. Druckmesseinrichtung nach einem der vorhergehenden Ansprüche, **dadurch gekennzeichnet, dass** die Zusatzmembran (30) eine Folie mit einer Dicke von 0,05 mm bis 0,5 mm ist.

## Claims

1. Pressure measuring device for detecting a pressure in a combustion chamber (26) of an internal combustion engine, having a force transmission body (12) which is arranged in a housing (14), is exposed to the combustion chamber (26), and transmits the combustion chamber pressure to a pressure measuring unit (50) at least indirectly by means of an axial movement, and having a resiliently flexible diaphragm (16) which is arranged between the force transmission body (12) and the housing (14), the resiliently flexible diaphragm (16) being of sprung configuration, in order to realise the axial movement of the force transmission body (12) within the housing (14), **characterized in that**
- the force transmission body (12) is held within the housing (14) by means of the resiliently flexible diaphragm (16), and **in that**
- a resiliently flexible additional diaphragm (30) is connected in front of the resiliently flexible diaphragm (16) on the combustion chamber side, which additional diaphragm (30) seals the resiliently flexible diaphragm (16) towards the combustion chamber (26), the additional diaphragm (30) being manufactured from a flexurally slack material, in such a way that the flexural stiffness of the resiliently flexible additional diaphragm (30) is considerably lower than the flexural stiffness of the resiliently flexible diaphragm (16), with the result that the additional diaphragm does not absorb any substantial flexural stresses and, to this extent, has only minimum mechanical effects on the pressure force which is absorbed by means of the force transmission body.

2. Pressure measuring device according to Claim 1, **characterized in that** a first supporting ring (31) is arranged on an outer side (20) of the force transmission body (12) and a second supporting ring (32) is arranged on an inner side (22) of the housing (14), and **in that** the resiliently flexible additional diaphragm (30) is arranged between the first and the second supporting ring (31, 32).

3. Pressure measuring device according to Claim 2, **characterized in that** an annular gap (33) is configured between the first and the second supporting ring (31, 32), and **in that** the resiliently flexible additional diaphragm (30) is arranged on a combustion chamber-side end side (35) of the first and second supporting ring (31, 32) so as to cover the annular gap (33).

4. Pressure measuring device according to Claim 2 or 3, **characterized in that** the additional diaphragm (30) is circumferentially welded sealingly to the supporting rings (31, 32).

5. Pressure measuring device according to one of Claims 2, 3 and 4, **characterized in that** at least one supporting ring (31, 32) has rounded outer edges (37).

6. Pressure measuring device according to one of the preceding claims, **characterized in that** the additional diaphragm (30) is mounted in an axially prestressed state.

7. Pressure measuring device according to one of the preceding claims, **characterized in that** the additional diaphragm (30) is manufactured from a thermally conducting material.

8. Pressure measuring device according to one of the preceding claims, **characterized in that** the additional diaphragm (30) is manufactured from a high-strength steel alloy, in particular from a high-alloy stainless steel.

9. Pressure measuring device according to one of the preceding claims, **characterized in that** the additional diaphragm (30) is manufactured from a corrosion-resistant material and a fatigue-resistant material.

10. Pressure measuring device according to one of the preceding claims, **characterized in that** the additional diaphragm (30) is a film with a thickness of from 0.05 mm to 0.5 mm.

## Revendications

1. Système de mesure de pression destiné à détecter une pression dans une chambre de combustion (26) d'un moteur à combustion interne, comprenant un corps de transfert de force (12) disposé dans un boîtier (14) qui est exposé à la chambre de combustion (26) et qui transfère la pression de la chambre de combustion à une unité de mesure de pression (50) au moins de manière indirecte au moyen d'un déplacement axial, et comprenant une membrane flexible élastique (16) qui est disposée entre le corps de transfert de force (12) et le boîtier (14), la membrane flexible élastique (16) étant réalisée de manière élastique afin de réaliser le déplacement axial du corps de transfert de force (12) à l'intérieur du boîtier (14),
**caractérisé en ce que**
- le corps de transfert de force (12) est retenu à l'intérieur du boîtier (14) au moyen de la membrane flexible élastique (16) et **en ce qu'**une membrane flexible élastique supplémentaire (30) est montée en amont de la membrane flexible élastique (16), laquelle étanchéifie la membrane flexible élastique (16) par rapport à la chambre de combustion (26), la membrane supplémentaire (30) étant fabriquée en un matériau flexible mou, de telle sorte que la rigidité en flexion de la membrane flexible élastique supplémentaire (30) soit nettement inférieure à la rigidité en flexion de la membrane flexible élastique (16) de sorte que la membrane supplémentaire ne reçoive aucune contrainte de flexion majeure et de ce fait n'exerce qu'une action mécanique minimale sur la force de pression reçue au moyen du corps de transfert de force.

2. Dispositif de mesure de pression selon la revendication 1, **caractérisé en ce qu'**une première bague de support (31) est disposée au niveau d'un côté extérieur (20) du corps de transfert de force (12) et une deuxième bague de support (32) est disposée au niveau d'un côté intérieur (22) du boîtier (14), et **en ce qu'**entre la première et la deuxième bague de support (31, 32) est disposée la membrane flexible élastique supplémentaire (30).

3. Dispositif de mesure de pression selon la revendication 2, **caractérisé en ce qu'**entre la première et la deuxième bague de support (31, 32) est réalisée une fente annulaire (33) et **en ce que** la membrane flexible élastique supplémentaire (30) est disposée de manière à recouvrir la fente annulaire (33) sur un côté frontal (35) de la première et de la deuxième bague de support (31, 32) du côté de la chambre de combustion.

4. Dispositif de mesure de pression selon la revendication 2 ou 3, **caractérisé en ce que** la membrane supplémentaire (30) est soudée hermétiquement sur son pourtour avec les bagues de support (31, 32).

5. Dispositif de mesure de pression selon l'une quelconque des revendications 2, 3 ou 4, **caractérisé en ce qu'**au moins une bague de support (31, 32) présente des arêtes extérieures arrondies (37).

6. Dispositif de mesure de pression selon l'une quelconque des revendications précédentes, **caractérisé en ce que** la membrane supplémentaire (30) est montée dans un état précontraint axialement.

7. Dispositif de mesure de pression selon l'une quelconque des revendications précédentes, **caractérisé en ce que** la membrane supplémentaire (30) est fabriquée en un matériau thermoconducteur.

8. Dispositif de mesure de pression selon l'une quelconque des revendications précédentes, **caractérisé en ce que** la membrane supplémentaire (30) est fabriquée en un alliage d'acier de grande résistance, en particulier en acier inoxydable hautement allié.

9. Dispositif de mesure de pression selon l'une quelconque des revendications précédentes, **caractérisé en ce que** la membrane supplémentaire (30) est fabriquée en un matériau résistant la corrosion et en un matériau résistant à la fatigue.

10. Dispositif de mesure de pression selon l'une quelconque des revendications précédentes, **caractérisé en ce que** la membrane supplémentaire (30) est un film ayant une épaisseur de 0,05 mm à 0,5 mm.
